## Europäisches Patentamt

## European Patent Office

## Office européen des brevets

(19)

(11) Veröffentlichungsnummer: **0 149 769**
**B1**

(12) **EUROPÄISCHE PATENTSCHRIFT**

(45) Veröffentlichungstag der Patentschrift:
31.05.89

(51) Int. Cl.⁴: **G 01 P 3/486**

(21) Anmeldenummer: **84114740.8**

(22) Anmeldetag: **04.12.84**

(54) Vorrichtung zur optoelektronischen Erfassung der Drehzahl einer Welle.

(30) Priorität: **20.01.84 DE 3401858**

(43) Veröffentlichungstag der Anmeldung:
**31.07.85 Patentblatt 85/31**

(45) Bekanntmachung des Hinweises auf die Patenterteilung:
**31.05.89 Patentblatt 89/22**

(84) Benannte Vertragsstaaten:
**DE FR GB IT SE**

(56) Entgegenhaltungen:
**FR-A-2 245 950**
**GB-A-1 315 115**

**CONTROL & INSTRUMENTATION, Band 4, Nr. 9, Oktober 1972, Seite 19, London, GB; "Optoelectronics finds applications in motor-speed control through use of a phototachometer" JOURNAL OF PHYSICS E, SCIENTIFIC INSTRUMENTS, Band 13, Nr. 8, August 1980, Seiten 826-828, The Institute of Physics, London, GB; B.L. WELSH: "An angular displacement transducer"**

(73) Patentinhaber: **Dr.Ing.h.c. F. Porsche Aktiengesellschaft, Porschestrasse 42, D-7000 Stuttgart 40 (DE)**

(72) Erfinder: **Dörr, Konrad, Dipl.- Phys., Gellertstrasse 119/121, D-7100 Heilbronn (DE)**

## Beschreibung

Die Erfindung betrifft eine Vorrichtung nach der Gattung des Hauptanspruchs.

Bei der Auslegung und Optimierung von mit Turboladern aufgeladenen Brennkraftmaschinen ist es notwendig, die Drehzahl der Welle des Turboladers zu erfassen, da sich daraus Rückschlüsse auf das Ansprechverhalten des Turboladers und damit auf das Leistungsverhalten der Brennkraftmaschine ziehen lassen.

In der Automobiltechnik werden zur Erfassung der Drehzahl von Wellen in der Regel induktive Impulsgeber verwendet. Aus "Bosch Technische Berichte", Band 7(1981), Heft 3, Seiten 140 bis 141, geht ein solcher Impulsgeber hervor, der als passiver magnetischer Streufeldsensor aufgeführt ist. Diese Impulsgeber setzen voraus, daß an der Welle oder Teilen der Welle ferromagnetische "Marken", z. B. in Form der Stahlzähne am Schwungscheibenzahnkranz einer Brennkraftmaschine oder eines in ein rotierendes Teil eingebrachten Stahl- oder Eisenstiftes, vorhanden sind oder angebracht werden können.

Es bietet sich an, die Drehzahl der Welle des Turboladers mit einem derartigen Impulsgeber zu messen, indem man die Laderradschaufeln zählt, die pro Zeiteinheit an dem im Ladergehäuse befestigten Impulsgeber vorbeilaufen. Da die Schaufeln eines Turboladers aber in der Regel aus Materialien bestehen, die entweder nichtferromagnetisch oder zur Bildung eines genügenden magnetischen Rückschlusses ungeeignet sind, müssen zu erprobende Turbolader entsprechend präpariert, d. h., mit ferromagnetischen "Marken" am Laderrad versehen werden. Das bringt erhöhte Kosten und Unwuchtprobleme mit sich. Ferner treten bei Turboladern, insbesondere nach Abstellen der Brennkraftmaschine auch auf der Laderseite hohe Temperaturen auf (bis ca. 280°), denen die Isoliermaterialien des Impulsgebers nicht standhalten.

Ebenfalls Probleme bringen in unmittelbarer Nähe der Turbolader verlaufende Teile der heute üblichen Hochleistungszündanlagen, da die Impulsgeber empfindlich gegen hohe elektromagnetische Streufelder sind. Die dadurch entstehenden Störungen können nicht mehr aus dem Meßsignal herausgefiltert werden.

Ein weiteres Problem ist ferner die notwendige genaue Positionierung der Impulsgeber an einem derart hoch beanspruchten Teil der Brennkraftmaschine.

Eine Anordnung zur Drehzahlerfassung eines Fahrzeugrades, bei der die temperatur- und erschütterungsempfindliche Elektronik zur Signalaufbereitung und -verarbeitung in ungefähr 10 cm Entfernung vom Drehzahl-Fühler am Fahrzeugrad liegt und mit diesem über elektrische Leitungen oder Lichtleiterkabel verbunden ist, ist aus der DE-OS-3 036 864 bekannt.

Bei dieser Anordnung sind zwar die temperatur- und erschütterungsempfindlichsten Bauteile vom Meßort getrennt. Aber der Drehzahlfühler sitzt immer noch im gefährdeten Bereich, er ist lediglich über eine temperaturunempfindliche und streufeldsichere Verbindungsleitung mit der Elektronik verbunden.

Ferner ist bei der Anordnung ein spezieller Modulator (Lochblende) notwendig, der an der Welle eines Turboladers gar nicht oder nur mit großen Schwierigkeiten anzubringen ist. Diese Modulatoren erfordern hohe Fertigungsgenauigkeit, exakten Rundlauf und genaue Zentrierung bei der Montage, sie sind damit auch teuer.

Ein weiterer Nachteil ist die mit ihrer mit 10 cm bis 15 cm Länge für den vorliegenden Anwendungsfall - zu kurze - Verbindungsleitung zwischen Drehzahlfühler und der Elektronik zur Signalaufbereitung. Die Elektronik befände sich damit in einem Bereich, der immer noch ständig hohen Temperaturen bzw. hohen kapazitiven und elektromagnetischen Streufeldern ausgesetzt ist. Aus diesen Gründen sollte sich die gesamte Elektronik nach Möglichkeit in einem Meßraum eines Brennkraftmaschinenprüfstandes oder im Armaturenbrettbereich eines zu erprobenden Kraftfahrzeugs befinden.

Im Journal of Physics E, Scientific Instruments, Band 13, Nr. 8, August 1980, ist auf den Seiten 826 bis 828 ein Aufnehmer zur Erfassung von Winkeländerungen beschrieben, welcher nach einem optischen Reflektionsprinzip arbeitet. Zur optischen Signalübertragung wird ein aus mehreren Einzelfasern bestehendes Lichtleiterbündel verwendet, das an seinem dem Lichtmodulator abgewandten Ende hälftig aufgespleißt ist. Die eine Hälfte des Lichtleiterbündels dient der Lichtein- und das andere der Lichtauskopplung zum Detektorelement mit nachfolgender Signalaufbereitung.

Eine Vorrichtung zur Messung der Umdrehungsgeschwindigkeit für einen Scheibenläufermotor mit einer lamellenartigen Ankerwicklung ist mit der FR-A-2 245 950 bekannt geworden. Hierbei wird der Scheibenläufer über einen Lichtleiter bestrahlt und das vom Scheibenläufer oder den Lamellen reflektierte Licht über einen weiteren Lichtleiter zu einem Fotodetektor hingeführt. Scheibenläufer und/oder Lamellen werden zum Erreichen eines guten Kontrastes oberflächenbehandelt.

Aus der GB-A-1 315 115 ist eine Vorrichtung zur Arbeitspunktregelung eines Fototransistors bekannt, welcher der Erfassung amplitudenmodulierten Lichts dient. Die Arbeitspunktregelung arbeitet mit einem Feldeffekttransistor als variablem, steuerbaren Widerstand und regelt den Arbeitspunkt auf konstantes, von langsamen Schwankungen des bestrahlenden Lichts unabhängiges Potential.

Aufgabe der Erfindung ist es daher, eine Vorrichtung zur optoelektronischen Erfassung der Drehzahl einer Welle zu schaffen, die nicht nur leicht montierbar, sondern auch unempfindlich gegen Erschütterungen, hohe Temperaturen sowie relativ starke elektromagnetische und kapazitive Streufelder ist. Darüber hinaus soll die Vorrichtung bei einfacher und kostengünstiger Herstellung ohne spezielle (Licht-) Modulatoren arbeiten, grössere Entfernungen (ca. 1 m bis 10 m) überbrücken können und eine sichere Signalerfassung und -verarbeitung gewährleisten.

Diese Aufgabe wird erfindungsgemäß durch die kennzeichnenden Merkmale des Anspruchs gelöst. Weitere, die Erfindung in vorteilhafter Weise ausgestaltende Merkmale sind in den Unteransprüchen enthalten.

Die Vorteile, die mit der Erfindung hauptsächlich erzielt werden, sind darin zu sehen, daß mit einfachen Mitteln eine Vorrichtung zur optoelektronischen Erfassung der Drehzahl einer Welle, insbesondere eines Turboladers geschaffen ist, die unter schwierigsten Meßbedingungen, wie sie an und um einen Turbolader herrschen, eine sichere Signalerfassung und -verarbeitung zuläßt, einfach und kostengünstig herzustellen und problemlos am Meßort anzubringen ist, ohne daß am Objekt, an dem die Messung vorgenommen werden soll, große Umbauten vorgenommen werden müssen.

Die Erfindung ist beispielhaft in den Zeichnungen dargestellt und wird nachstehend näher erläutert.

Es zeigt

Fig. 1   ein Prinzipschaltbild der erfindungsgemäßen Vorrichtung am Beispiel eines Turboladers,

Fig. 2   eine Ansicht in Pfeilrichtung A der Fig. 1 in größerem Maßstab,

Fig. 3   ein Schaltbild einer Lichtquelle und eines Lichtempfängers mit zugehöriger Elektronik,

Fig. 4   ein Bodediagramm mit einer Verstärkungskennlinie eines Signalformers,

Fig. 5   Diagramme über den zeitlichen Verlauf von:
a) einem Ausgangssignal der Lichtempfängeranordnung ohne Regelung des Arbeitspunktes,
b) einem Ausgangssignal der Lichtempfängeranordnung mit Regelung des Arbeitspunktes,
c) einem dem Nutzsignal überlagerten (Schwebungs-) Störsignal,
d) einem Ausgangssignal der Signalformerstufe, das dem Nutzsignal weitgehend entspricht.

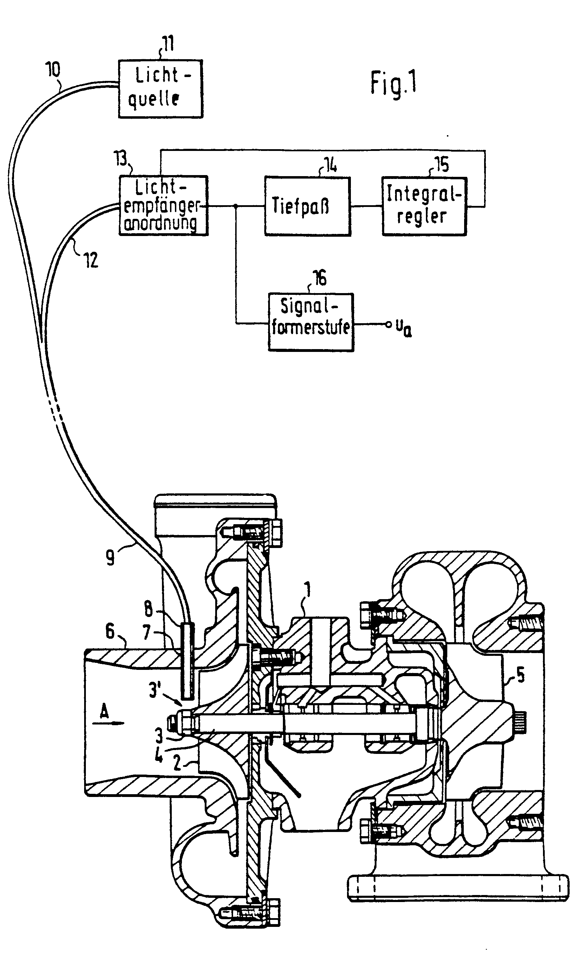

In Fig. 1 ist mit 1 ein Turbolader bezeichnet, dessen Laderrad 2 mit einer Sechskantmutter 3 auf der Welle 4 befestigt ist, die das Laderrad 2 mit dem Abgasturbinenrad 5 kraftschlüssig verbindet. Am Lufteinlaß 6 ist eine Bohrung 7 angebracht, deren Symmetrieachse radial auf die Sechskantmutter 3 zeigt. In dieser Bohrung 7 ist mittels Schrauben, Klemmen oder Kleben eine Hülse 8 angebracht, die das Lichtleiterbündel 9 auf seinen, dem Lichtmodulator 3' zugewandten Ende zusammenfaßt.

Am anderen Ende des Lichtleiterbündels 9 ist dieses etwa hälftig aufgespleißt. In die eine Hälfte 10 wird Licht von einer Lichtquelle 11 in das Lichtleiterbündel 9 eingekoppelt und von diesem zum Meßort, der als Lichtmodulator 3' dienenden Sechskantmutter 3, hingebracht. Von der Sechskantmutter 3 wird das aus dem Lichtleiterbündel 9 austretende Licht diffus reflektiert. Entsprechend der jeweiligen, relativen Stellung der Sechskantmutter 3 zur Hülse 8, tritt ein größerer oder kleinerer Anteil des reflektierten Lichts wieder in das Lichtleiterbündel 9 ein; das in das Lichtleiterbündel 9 zurückgekoppelte Licht wird also in seiner Amplitude moduliert.

Mit der anderen Hälfte 12 des aufgespleißten Lichtleiterbündels 9 wird das zurückgekoppelte Licht aus dem Lichtleiterbündel ausgekoppelt und der Lichtempfängeranordnung 13 zugeführt. Ein Arbeitspunkt der Lichtempfängeranordnung wird mittels eines Tiefpasses 14 mit nachgeschaltetem Integralregler 15 geregelt. Ein Ausgangssignal der Lichtempfängeranordung 13 wird einer Signalformerstufe 16 zugeführt, die aus diesem durch Filterung ein einwandfrei weiterverarbeitbares Signal (Ausgangssignal der Meßanordnung $u_a$ gewinnt, dessen Frequenz proportional zur Drehzahl der Welle des Turboladers ist. Das Ausgangssignal der Meßanordnung $u_a$ kann über einen Frequenz-Spannungwandler einem Anzeigeinstrument zugeführt werden, oder von einer Triggerschaltung mit nachgeschaltetem Frequenzzähler oder Prozeßrechner weiterverarbeitet werden.

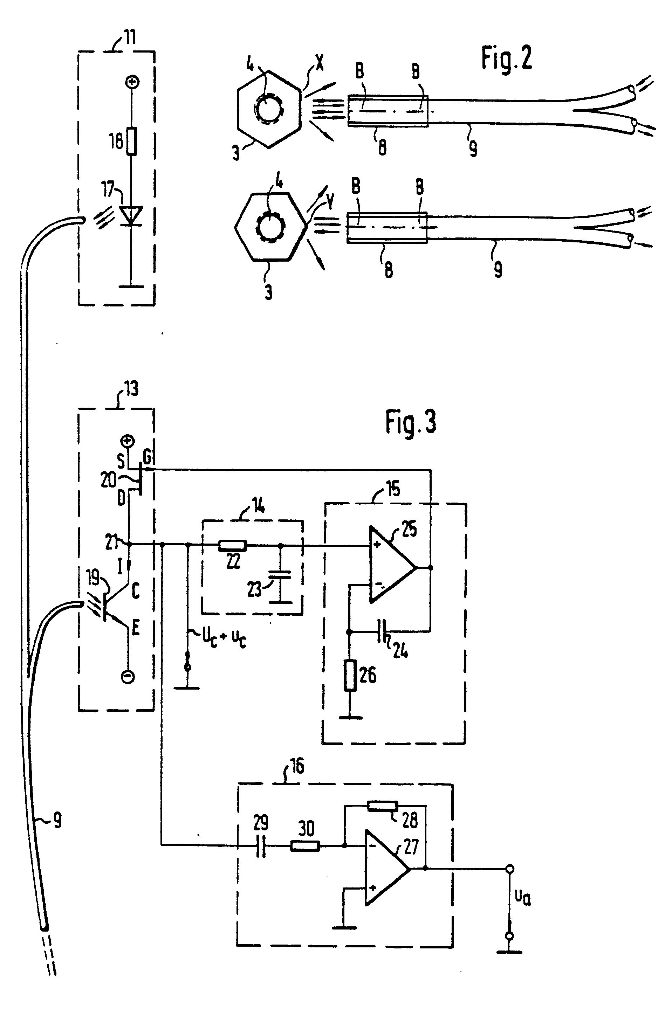

Fig. 2 zeigt die lichtmodulierende Wirkung der Sechskantmutter 3. Steht eine Fläche der Sechskantmutter 3 senkrecht zur Achse B - B der Hülse 8, so wird der größte Teil des senkrecht aus dem Lichtleiterbündel 9 austretenden Lichtanteils von der Oberfläche der Sechskantmutter 3 in das Lichtleiterbündel 9 zurückgeworfen (Position X der Sechskantmutter). Steht dagegen eine Kante der Sechskantmutter 3 gegenüber der Hülse 8, so wird der größte Teil des aus dem Lichtleiterbündel 9 austretenden Lichts an der Kante bzw. den der Kante benachbarten Flächen der Sechskantmutter gestreut, so daß nur ein sehr geringer Anteil des austretenden Lichts wieder in das Lichtleiterbündel zurückgelangt (Position Y der Sechskantmutter).

Auf diese Weise wird bei Rotation der Welle 4 das in das Lichtleiterbündel 9 reflektierte Licht von der Sechskantmutter 3 in seiner Amplitude moduliert.

In Fig. 3 sind Schaltbilder der Lichtquelle 11 und des Lichtempfängers 13 mit der zugehörigen Elektronik abgebildet.

Die Lichtquelle 11 besteht aus einer infrarotlichtemittierenden Diode 17, deren Anode über einen Vorwiderstand 18 an eine positive Versorgungsspannung und deren Kathode an ein Massepotential angeschlossen ist.

Die Lichtempfängeranordnung 13 umfaßt einen selektiv auf Infrarotlicht ansprechenden Fototransistor 19, dessen Emitter E an einer negativen Versorgungsspannung liegt und dessen Kollektor C über die Drain-Source-Strecke eines, als veränderbaren Kollektorwiderstand eingesetzten, Feldeffekttransistors (FET) 20 an die positive Versorgungsspannung angeschlossen ist.

Durch die Verwendung von Infrarotlicht ergibt sich eine weitestgehende Unempfindlichkeit der Meßanordnung gegen Fremdlicht und Verschmutzung.

Am Verbindungspunkt 21 zwischen dem Kollektor C des Phototransistors und der Drain D des FET liegt die Kollektorgleichspannung $U_c$ (Arbeitspunkt), der Nutz- und Störspannungssignale (Kollektorwechselspannung $u_c$) überlagert sind.

Um nun die Kollektorgleichspannung $U_c$ unabhängig von Störungen im Lichtübertragungsweg (Verschmutzung des Lichtleiterendes oder der Sechskantmutter 3, Abstand von Hülse 8 zur Sechskantmutter 3), Schwankungen des Lichtstroms der Lichtquelle und dem unterschiedlichen Reflexionsgrad der Sechskantmuttern verschiedener Turbolader zu machen, ist es notwendig, den Photostrom I so zu regeln, daß sich eine zeitlich konstante Kollektorgleichspannung $U_c$ einstellt; dabei wird zweckmäßigerweise die Kollektorgleichspannung $U_c$ auf Massepotential, also den Wert Null, geregelt.

Dazu wird an den Kollektor C ein Tiefpaß erster Ordnung 14 angeschlossen, der die Kollektorwechselspannung $U_c$ gegenüber der Kollektorgleichspannung $U_c$ weitgehend unterdrückt. Er ist in bekannter Weise als R-C-Glied (Reihenwiderstand 22 und Parallelkondensator 23 gegen Massepotential) geschaltet; seine Knickfrequenz soll wenigstens zwei Zehnerpotenzen unterhalb der kleinsten, noch vorkommenden Meßfrequenz liegen. Auf den Tiefpaß 14 folgt ein Integralregler 15; dieser ist als nicht invertierender Integrator geschaltet (mit einem Kondensator 24 gegengekoppelter Operationsverstärker 25, dessen invertierender Eingang über einem Widerstand 26 gegen Masse gelegt ist). Der Integralregler steuert das Gate G des FET 20 an und verändert damit seinen Drain-Source-Widerstand, der als veränderbarer Kollektorwiderstand dient. Wegen des integrierenden Verhaltens des Regelkreises wird die Kollektorgleichspannung $U_c$ somit auf den Wert Null geregelt.

Am Verbindungspunkt 21 steht daher ein reines Wechselsignal, die Kollektorwechselspannung $u_c$, an. Sie setzt sich additiv aus dem Nutzsignal $u_{cn}$ und Störsignalen $u_{cs}$ zusammen. Aufgrund der offenen Basis des Fototransistors 19 ist die Amplitude der Kollektorwechselspannung gering und fällt zudem mit wachsender Frequenz um 20 dB pro Dekade. Es kommt hinzu, daß die Welle des Turboladers bei höheren Drehzahlen (bei ca. 80 000 Umdrehungen pro Minute) zu taumeln beginnt. Aufgrund dessen überlagert sich dem Nutzsignal $u_{cn}$ ein Störsignal $u_{cst}$ in Form einer Schwebung. Die Frequenz $f_{st}$ dieser Schwebung beträgt ein Sechstel der Frequenz $f_n$ des Nutzsignals, da durch die Sechskantmutter 3 pro Umdrehung der Welle sechs annähernd sinusförmige Schwingungen erzeugt werden, durch das Taumeln der Welle (Durchbiegen der Welle) jedoch nur eine. Allerdings ist die Amplitude des durch das Taumeln der Welle entstehenden Störsignales $u_{cst}$ groß und kann bis zu 100 % der Amplitude des Nutzsignals betragen; ein sicheres Triggern (Erfassen der Nulldurchgänge) des Signals $u_c$ ist deshalb nicht gegeben (andere Störsignale treten mit wesentlich geringerer Amplitude auf, weswegen sie vernachlässigt werden können).

Aus diesen Gründen ist eine Signalaufbereitung durch die Signalformerstufe 16 notwendig. Diese ist erfindungsgemäß als aktiver Hochpaß erster Ordnung (verzögert differenzierender Verstärker) ausgeführt mit einem Operationsverstärker 27, der über einen Widerstand 28 gegengekoppelt ist und dem die Kollektorwechselspannung $u_c$ mittels eines in Reihe zu einem Kondensator 29 geschalteten Widerstands 30 über den invertierenden Eingang zugeführt wird und dessen nichtinvertierender Eingang auf Massepotential gelegt ist. Die Knickfrequenz $f_{kh}$ des aktiven Hochpasses erster Ordnung ist so ausgelegt, daß sie doppelt, mindestens jedoch 1,4-mal ($\sqrt{2}$-mal) so hoch wie die höchste, vorkommende Frequenz des Meßbereichs ist. Der Verstärkungsfaktor $V_h$ kann den nachfolgend angeschlossenen Geräten angepaßt werden.

Durch die im genutzten Frequenzbereich mit 20 dB pro Dekade mit der Frequenz ansteigende Verstärkungskennlinie der Signalformerstufe ergibt sich zum einen ein konstanter Ausgangspegel der Meßanordnung über den nutzbaren Frequenzbereich zum anderen wird die Amplitude des überlagerten (Schwebungs-) Störsignals $u_{cst}$ um etwa 14 dB gedämpft, so daß das Ausgangssignal der Meßanordnung $u_a$ einwandfrei weiterverarbeitet bzw. getriggert werden kann. Durch die oberhalb des Meßbereichs in die Horizontale übergehende Verstärkungskennlinie der Signalformerstufe wird die (zu hohe) Verstärkung höherfrequenter Anteile der Störsignale $u_{cs}$ vermieden.

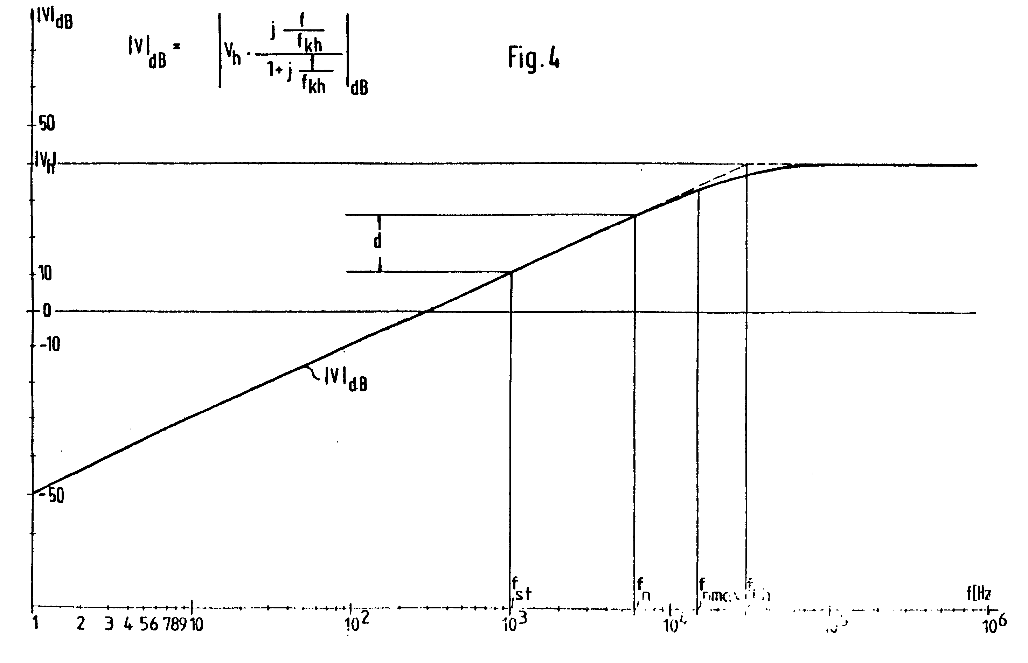

Fig. 4 zeigt ein entsprechendes Bodediagramm der Verstärkungskennlinie der Signalformerstufe. Ober der logarithmisch geteilten Abszisse ist die Frequenz in Hertz (Hz) aufgetragen, die linear geteilte Ordinate zeigt den Betrag der Verstärkung $|V|$ in Dezibel (dB) in Stufen von 10 dB/cm. Dabei ist der Verstärkungsfaktor $|V_h|_{dB}$ zu 40 dB angenommen. Die Verstärkungskennlinie $|V|_{dB}$ ist dick ausgezogen gezeichnet, die sie approximierenden Asymptoten gestrichelt. Auf der Abszisse sind ferner die höchste

vorkommende Frequenz $f_{max}$ mit 15 kHz, die Knickfrequenz $f_{kh}$ mit 30 kHz und ein Meßpunkt $f_n$ bei 6 kHz, sowie die zugehörige Frequenz $f_{st}$ der Schwebung bei 1 kHz eingezeichnet. In Ordinatenrichtung ist die zu den beiden zuletztgenannten Frequenzen gehörende Dämpfung d der Schwebung gegenüber dem Nutzsignal zu entnehmen, die im ungünstigsten Fall etwa 14 dB beträgt.

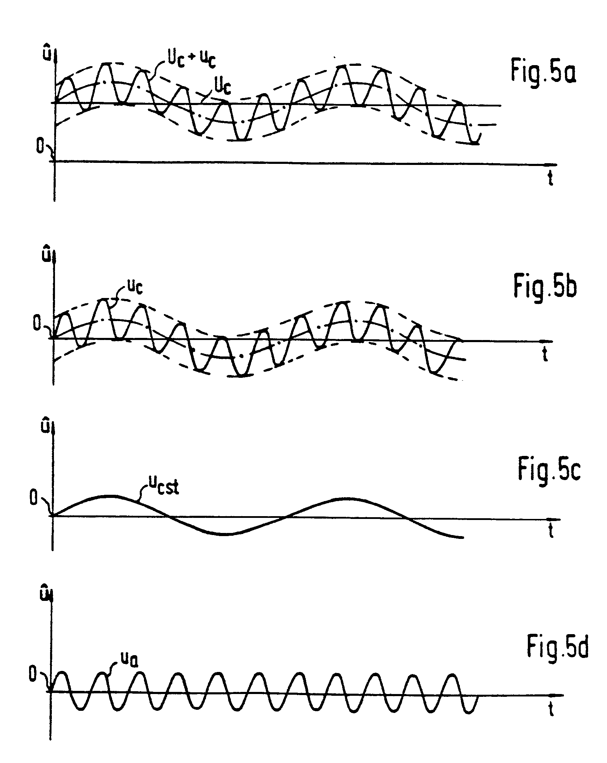

Fig. 5 schließlich zeigt den (prinzipiellen) zeitlichen Verlauf

a) des Ausgangssignals der Lichtempfängeranordnung ohne Regelung des Arbeitspunktes,
b) mit Regelung des Arbeitspunktes,
c) das (Schwebungs-) Störsignal,
d) das Ausgangssignal der Signalformerstufe; dabei ist jeweils auf der Abszisse die Zeit, auf der Ordinate die Amplitude û der Signale aufgetragen. Bei a) und b) ist das (Schwebungs-) Störsingal strichpunktiert aufgetragen, die das Signal begrenzenden Hüllkurven sind gestrichelt angedeutet.

Selbstverständlich ist die Vorrichtung nicht nur auf die Erfassung der Drehzahl einer Turboladerwelle beschränkt. Vielmehr kann sie überall dort eingesetzt werden, wo an Wellen bereits geeignete "Lichtmodulatoren" in Form von Muttern, Kerben, Zähnen oder dergleichen vorhanden sind und höhere Impulszahlen pro Zeiteinheit auftreten. Verschmutzungen beeinflussen die Vorrichtung keineswegs, sofern keine Benetzung des Lichtleiterendes auf der Modulatorseite mit Flüssigkeiten oder mit großen Mengen von lichtabsorbierenden Feststoffen auftritt. Der Modulator kann dagegen beliebig verschmutzt sein, auch werden keine besonderen Anforderungen an seinen Rundlauf gestellt. Bei anderen Einsatzgebieten ist lediglich die Elektronik entsprechend anzupassen. Insbesondere kann es notwendig sein, der Signalformerstufe einen Tiefpaß nachzuschalten, falls dem Meßsignal hochfrequente Störungen überlagert sind. Die Knickfrequenz dieses Tiefpasses muß dann oberhalb der Knickfrequenz des aktiven Hochpasses liegen.

Durch die große räumliche Trennung des Meßortes von der empfindlichen Elektronik zur Signalaufbereitung und -verarbeitung, die mit der erfindungsgemäßen Vorrichtung bis zu 10 m betragen kann, ist es möglich, die Drehzahl oder die Position von Wellen auch an Orten mit sehr "rauhen" Umgebungsbedingungen (hohe Temperaturen, Strahlung, elektrische und magnetische Streufelder, Erschütterungen, etc.) sicher zu erfassen. Es versteht sich von selbst, daß durch den Einsatz moderner Technologie, wie Lasern als Lichtquelle-, besserer Lichtleiter und empfindlicherer Lichtempfänger weitaus größere Entfernungen überbrückt werden können. Die einfache Montage sowie die problemlose Justierung und die geringen Kosten sind weitere Vorteile der beschriebenen Vorrichtung.

## Patentansprüche

1. Vorrichtung zur optoelektronischen Erfassung der Drehzahl einer Welle, insbesondere eines Turboladers, die einen der Welle zugeordneten Lichtmodulator, eine Lichtquelle und eine Lichtempfängeranordnung mit nachgeschalteter Auswerteelektronik umfaßt, wobei zur optischen Signalübertragung ein aus mehreren Einzelfasern bestehendes Lichtleiterbündel (9) vorgesehen ist, das an seinem, dem Lichtmodulator (3') abgewandten Ende für die Lichteinkopplung von der Lichtquelle (11) bzw. für die Lichtauskopplung zur Lichtempfängeranordnung (13) etwa hälftig aufgespleißt ist, dadurch gekennzeichnet, daß der Lichtmodulator (3') aus einem auf der Welle (4) bereits vorhandenen, über seinen Umfang in radialer Richtung unterschiedliche Reflexionsgrade aufweisenden, das Licht diffus reflektierenden Bauteil besteht und daß das ausgekoppelte Licht einem Fototransistor (19) der Lichtempfängeranordnung (13) zugeführt wird, dessen Emitter (E) an einer negativen Versorgungsspannung liegt, und dessen Kollektorspannung $U_c$ (Arbeitpunkt) mittels eines, von einem Tiefpaßfilter (14) mit nachgeschaltetem Integralregler (15) angesteuerten, veränderbaren, an einer positiven Versorgungsspannung anliegenden Kollektorwiderstands auf ein Massepotential geregelt wird und die Kollektorwechselspannung ($u_c$) einer Signalformerstufe (16) zur Gewinnung eines weiterverarbeitbaren Wechselsignals mit drehzahlproportionaler Frequenz zugeführt wird.

2. Vorrichtung nach Anspruch 1, dadurch gekennzeichnet, daß als Lichtmodulator (3') eine Sechskantmutter (3) zur Befestigung des Laderrads (2) auf der Welle des Turboladers (1) verwendet wird.

3. Vorrichtung nach den Ansprüchen 1 und 2, dadurch gekennzeichnet, daß das Lichtleiterbündel (9) auf seinem, dem Lichtmodulator (3') zugewandten Ende radial auf diesen ausgerichtet ist.

4. Vorrichtung nach Anspruch 3, dadurch gekennzeichnet, daß das dem Lichtmodulator (3') zugewandte Ende des Lichtleiterbündels (9) in einer Hülse (8) zusammengefaßt ist, die in einer radial zur Sechskantmutter (3) verlaufenden Bohrung (7) in einem Lufteinlaß (6) des Turboladers (1) mittels Schrauben, Klemmen oder Kleben befestigt ist.

5. Vorrichtung nach den Ansprüchen 1 bis 4, dadurch gekennzeichnet, daß die Einzelfasern des Lichtleiterbündels (9) Glasfasern sind.

6. Vorrichtung nach den Ansprüchen 1 bis 5, dadurch gekennzeichnet, daß der veränderbare Kollektorwiderstand ein Feldeffekttransistor (20) ist.

7. Vorrichtung nach den Ansprüchen 1 bis 6, dadurch gekennzeichnet, daß das Tiefpaßfilter (14) als Tiefpaß erster Ordnung ausgeführt ist und daß seine Knickfrequenz sehr viel kleiner, mindestens jedoch um zwei Zehnerpotenzen kleiner als die kleinste, vorkommende Meßfrequenz ist.

8. Vorrichtung nach den Ansprüchen 1 bis 7, dadurch gekennzeichnet, daß die Signalformerstufe (16) als aktiver Hochpaß erster Ordnung (verzögert differenzierendes Glied) ausgeführt ist und daß seine Knickfrequenz etwa doppelt so hoch, mindestens jedoch etwa 1,4-mal (√2 -mal) so hoch wie die höchste, vorkommende Meßfrequenz ist.

9. Vorrichtung nach den Ansprüchen 1 bis 8, dadurch gekennzeichnet, daß die Lichtquelle (11) eine infrarotlichtemittierende Diode (17) umfaßt und der Fototransistor (19) ein selektiv auf Infrarotlicht ansprechender Fototransistor ist.

**Claims**

1. Apparatus for optoelectronically detecting the rotational speed of a shaft, in particular of a turbocharger, which comprises a light modulator connected to the shaft, a light source and a light receiving arrangement with subsequently connected electronic evaluating system, wherein an optical-fibre bundle (9) consisting of several individual fibres is provided for optical signal transmission, said optical-fibre bundle (9) being fanned out roughly in two halves at its end remote from the light modulator (3') for the coupling of light from the light source (11) and for the decoupling of light to the light receiving arrangement (13), characterised in that the light modulator (3') consists of a component which is already present on the shaft (4), has differing reflection factors in the radial direction over its periphery and reflects the light diffusely and in that the decoupled light is supplied to a phototransistor (19) of the light receiving arrangement (13), the emitter (E) of which is connected to a negative voltage supply and the collector voltage $U_c$ (operating point γ) of which is controlled to earth potential by means of a variable collector resistor which is controlled by a low-pass filter (14) with subsequently connected integral controller (15) and is connected to a positive voltage supply, and the collector a. c. voltage ($u_c$) is fed to a signal forming stage 16 for producing an alternating signal which can be further processed and has a frequency proportional to the speed of rotation.

2. Apparatus according to Claim 1, characterised in that a hexagonal nut (3) for fixing the charger wheel (2) on the shaft of the turbocharger (1) is used as light modulator (3').

3. Apparatus according to claims 1 and 2, characterised in that the optical-fibre bundle (9) is orientated radially to the light modulator (3') at its end facing the light modulator (3').

4. Apparatus according to Claim 3, characterised in that the end of the optical-fibre bundle (9) facing the light modulator (3') is united in a tube (8) which is fixed in a passage (7) running radially to the hexagonal nut (3) in an air intake (6) of the turbocharger (1) by means of screws, clamps or adhesion.

5. Apparatus according to Claims 1 to 4, characterised in that the individual fibres of the optical-fibre bundle (9) are glass fibres.

6. Apparatus according to Claims 1 to 5, characterised in that the variable collector resistor is a field-effect transistor (20).

7. Apparatus according to Claims 1 to 6, characterised in that the low-pass filter (14) is designed as a low pass of first order and that its cutoff frequency is very much lower, but at least two powers of ten lower than the lowest measuring frequency occurring.

8. Apparatus according to claims 1 to 7, characterised in that the signal forming stage (16) is designed as an active high pass of first order (element which differentiates with delay) and in that its cutoff frequency is roughly twice as high, but at least about 1.4 times (√2 times) as high as the highest measuring frequency occurring.

9. Apparatus according to Claims 1 to 8, characterised in that the light source (11) comprises an infrared light emitting diode (17) and the phototransistor (19) is a phototransistor which responds selectively to infrared light.

**Revendications**

1. Dispositif pour la détection optoélectronique de la vitesse de rotation d'un arbre, notamment d'un turbocompresseur, qui comporte un modulateur de lumière à associé à l'arbre, une source lumineuse et un dispositif récepteur de lumière la suite duquel est montée une électronique d'évaluation, un faisceau de guides de lumière (9) constitué de plusieurs fibres individuelles étant prévu, lequel est détordu en deux moitiés son extrémité opposée au modulateur de lumière (3') pour l'introduction de la lumière provenant de la source lumineuse (11) ou pour le couplage lumineux vers l'agencement récepteur de lumière, caractérisé en ce que le modulateur de lumière (3') est constitué par un élément structural déjà existant sur l'arbre, présentant des degrés de réflexion différents sur sa périphérie dans le sens radial et réfléchissant la lumière de façon diffuse, et en ce que la lumière découplée est amenée à un phototransistor (19) de l'agencement récepteur de lumière (13) dont l'émetteur (E) se trouve une tension d'alimentation négative, et dont la tension de collecteur $U_c$ (point de fonctionnement) est réglée à un potentiel de masse au moyen d'une résistance de collecteur variable, commandée par un filtre passe-bas (14) suivi d'un régulateur intégral (15), mis à une tension d'alimentation positive, et en ce que la tension alternative du collecteur ($u_c$) est amenée à un étage formateur de signaux (16) pour obtenir un signal alternatif ayant une fréquence proportionnelle à la vitesse de rotation, signal qui peut subir un traitement ultériéur.

2. Dispositif selon la revendication 1, caractérisé en ce qu'on utilise comme modulateur de lumière (3') un écrou à six pans (3) pour fixer la roue de compresseur (2) sur l'arbre du turbocompresseur (1).

3. Dispositif selon les revendications 1 et 2, caractérisé en ce que le câble de fibres optiques (9), à son extrémité tournée vers le modulateur de lumière (3'), est orienté radialement vers celui-ci.

4. Dispositif selon la revendicaiton 3, caractérisé en ce que l'extrémité du câble de fibres optiques (9) tournée vers le modulateur de lumière est rassemblée dans un manchon (8) qui est fixé dans un alésage (7) s'étendant radialement par rapport à l'écrou à six pans (3), dans une admission d'air (6) du turbocompresseur (1) au moyen de vis, de bornes ou par collage.

5. Dispositif selon les revendications 1 à 4, caractérisé en ce que les fibres individuelles du câble de fibres optiques (9) sont des fibres de verre.

6. Dispositif selon les revendications 1 à 5, caractérisé en ce que la résistance de collecteur variable est un transistor à effet de champ (20).

7. Dispositif selon les revendications 1 à 6, caractérisé en ce que le filtre passe-bas (14) est réalisé en tant que passe-bas de premier ordre, et en ce que sa fréquence de coupure est beaucoup plus petite, au moins deux puissances de dix fois plus petites que la plus petite fréquence de mesure se présentant.

8. Dispositif selon les revendications 1 à 7, caractérisé en ce que l'étage formateur de signaux (16) est réalisé en tant que passe-haut actif de premier ordre (élément différenciateur à retardement et en ce que sa fréquence de coupure est environ deux fois plus haute, toutefois au moins 1,4 fois ($\sqrt{2}$ fois, plus haute que la plus haute fréquence de mesure se présentant.

9. Dispositif selon les revendications 1 à 8, caractérisé en ce que la source lumineuse (11) comporte une diode (17) émettant de la lumière infrarouge et en ce que le phototransistor (19) est un phototransistor réagissant sélectivement à la lumière infrarouge.

Fig.1

11 Licht-quelle

10

13 Licht-empfänger-anordnung

14 Tiefpaß

15 Integral-regler

16 Signal-formerstufe

$U_a$

12

9

8

6

7

3'

A

3

4

2

5

1

Fig.2

Fig.3

$U_c + u_c$

$U_a$

Fig. 4

$$|V|_{dB} = \left| V_h \cdot \frac{j\,\dfrac{f}{f_{kh}}}{1+j\,\dfrac{f}{f_{kh}}} \right|_{dB}$$

Fig.5a

Fig.5b

Fig.5c

Fig.5d